# Europäisches Patentamt
# European Patent Office
# Office européen des brevets

(19)

(11) Publication number: **0 033 587**
**B1**

(12)

# EUROPEAN PATENT SPECIFICATION

(45) Date of publication of patent specification: **11.05.83**

(51) Int. Cl.³: **B 29 F 3/00, B 29 F 3/06**

(21) Application number: **81300125.2**

(22) Date of filing: **13.01.81**

(54) Preparation of shaped crosslinked materials.

(30) Priority: **18.01.80 GB 8001788**

(43) Date of publication of application:
**12.08.81 Bulletin 81/32**

(45) Publication of the grant of the patent:
**11.05.83 Bulletin 83/19**

(84) Designated Contracting States:
**AT BE CH DE FR GB IT LI LU NL SE**

(56) References cited:
**DD - A - 109 344**
**DE - A - 2 432 758**
**DE - A - 2 830 352**
**DE - B - 1 964 895**
**GB - A - 1 158 011**
**GB - A - 1 292 227**
**GB - A - 1 454 431**
**US - A - 3 864 069**
**US - A - 3 876 736**
**US - A - 3 891 372**
**US - A - 3 985 484**
**US - A - 4 089 917**

(73) Proprietor: **WIRSBO BRUKS AKTIEBOLAG**
**S-730 61 Virsbo (SE)**

(72) Inventor: **Imgram, Friedrich**
**Am Frankfurter Weg 2**
**D-6056 Heusenstamm (DE)**
Inventor: **Suppanz, Gerhard**
**Friedland-Strasse 16**
**D-6072 Dreieich-Sprendlingen (DE)**
Inventor: **Massoth, Richard**
**Muhlstrasse 44**
**D-6054 Rodgau 1 (DE)**

(74) Representative: **Evans, David Charles et al,**
**F.J. CLEVELAND & COMPANY 40-43, Chancery Lane**
**London, WC2A 1JQ (GB)**

EP 0 033 587 B1

Preparation of shaped crosslinked materials

The present invention relates to a process for forming shaped crosslinked polyolefinic materials by extrusion which process comprises subjecting a crosslinkable polyolefinic material to high pressure in a high pressure treatment zone and passing said material through a first relaxation and expansion zone wherein the temperature is below the threshold temperature and through a constriction into an annular passage of a die barrel assembly, whereby the material is shaped to assume the final shape and whereby the material is heated due to the action of pressure and constricted flow to temperatures above said threshold temperature. Such a process is described in GB—A—1,158,011. This specification discloses a process for the manufacture of shaped articles of a crosslinked thermoplastics material which process comprises mixing a thermoplastic material capable of forming a free radical with a crosslinked agent and subjecting the material to instantaneous compression at a pressure in excess of $2.10^8$ N/m² (2000 atmospheres) under conditions such that substantial crosslinking of the thermoplastic material does not occur, thereafter forming shapes of the mixture and causing or allowing crosslinking of the shaped material to take place.

In a practical embodiment of the invention forming the subject of GB—A—1,158,011 the material is extruded and the extrusion is carried out prior to substantial crosslinking of the material taking place.

It will be appreciated that where one is using a crosslinking agent the system is temperature dependant. The material to be shaped is heated to a temperature below the threshold temperatures at which crosslinking is initiated and the material can be treated as a thermoplastics material, i.e. it may be worked, molded and shaped. Once the material has attained a temperature at or greater than the threshold temperature at which crosslinking takes place, crosslinking proceeds fairly rapidly so that the material thereafter adopts the properties of a thermoset material.

The purpose of the instantaneous compression is to work the material to produce a uniform temperature rise throughout the body of the material. Since the thermoplastics materials in general are poor heat conductors, mere heating will result in that portion of the material juxtaposed the heat source achieving a temperature approaching or at the threshold temperature at which crosslinking takes place, whereas the centre of the body of the material is not at that temperature with a result that crosslinking in that area does not occur, thus producing non-uniform properties in the final product. By working the material i.e. by subjecting it to compression, the temperature is raised uniformly throughout the body of the material and can be so maintained during further processing. The temperature control of the material *vis a vis* the threshold temperature is of considerable importance and hitherto the principle has been to pass the material through a die so that the working of the material by passage of the material through the die results in a sufficient increase in temperature to raise the material above the threshold temperature at which crosslinking takes place.

Crosslinking of the material then commences and as the material passes along the shaping die, the crosslinking reaction proceeding substantially to completion to form, in the case of the specific example of GB—A—1,158,011 a crosslinked polyethylenic tube.

This process has been commercially successful. Tubing formed of polyethylene or polypropylene in accordance with GB—A—1,158,011 has found extensive use as tubing, *inter alia* for hot water and heating systems, and the material has considerable advantages over the traditional materials of copper and stainless steel for such purposes.

In order to have suitable longevity, it is essential that the tubing produced by this process has uniform properties throughout and the wall thickness should be completely free of voids, vacuities and bubbles.

The need to obtain uniformity of crosslinking, uniformity of dimensions and the avoidance of bubbles and voids and the like is self-evident. In practice, however, the process of GB—A—1,158,011 does not provide the means of obtaining such uniformity of properties in production.

An attempt to alleviate the foregoing difficulties has been made in US—A—4,089,917 which discloses the batch production of a crosslinked material wherein the crosslinkable material is first heated by compression to a crosslinking temperature by shearing and subsequently held at as high a pressure as possible in an accumulator prior to being passed to a die forming passage in which shaping occurs.

According to one aspect of the present invention there is provided a process for forming shaped crosslinked polyolefinic materials by extrusion which process comprises subjecting a crosslinkable polyolefinic material to high pressure in a high pressure treatment zone and passing said material through a first relaxation and expansion zone wherein the temperature is below the threshold temperature and through a constriction into an annular passage of a die barrel assembly, whereby the material is shaped to assume the final shape and whereby the material is heated due to the action of pressure and constricted flow to temperatures above said threshold temperature, characterised in that the material leaving the constriction is passed through a second relaxation and expansion zone series connected to said constriction at a temperature still below the threshold temperature and through a second constriction delimiting said second relaxation and expansion zone to enter the annular passage at a temperature in excess of said threshold temperature.

The crosslinkable material may be a polyolefin in admixture with a crosslinking agent therefor; in a specific example the polyolefin may be polyethylene and the crosslinking agent may be dicumyl peroxide.

In a particular embodiment of the present invention the material may be passed from the high pressure treatment zone to the first relaxation and expansion zone through a breaker plate assembly (28) which provides a back pressure for maintaining high pressure within said high pressure zone and at the same time causes or allows working of the material to further increase the temperature of the material passing into said first relaxation and expansion zone.

The die may comprise a passage of generally annular cross-section to produce a tube and the die passage may be provided with means (39) at or towards the outlet thereof for maintaining a back pressure within said die passage. The crosslinkable polyolefinic material may include a proportion of lubricant and/or stabiliser.

The present invention also includes an extruder for forming shaped crosslinked polyolefinic materials, said extruder comprising a high pressure treatment zone (17, 19, 34) for subjecting a crosslinkable polyolefinic material to high pressure, a breaker plate assembly (28) contiguous with said high pressure treatment zone (17, 19, 34) and debouching into an annular passage formed in a die barrel assembly (51), said annular passage (53) including a relaxation and expansion zone series connected to said breaker plate assembly (28), a constriction (45) forming the outlet of said relaxation and expansion zone and a die passage (53) to define the tube shape, characterised in that a second relaxation and expansion zone is series connected to first constriction (40) and defined by a second constriction (45), said constrictions being formed on a mandrel (37) disposed coaxially within said die barrel assembly (51) and releasably connected to the breaker assembly (28).

The relaxation zones may be defined at one end by a breaker plate assembly (28) debouching into the feed end of a die passage which constitutes the first relaxation zone (41). The heating in the die means may be effected by the application of external heat and by the working of material passing the constrictions (40, 45) to provide substantial uniform heating of the material to a temperature of greater than that at which crosslinking occurs thereby initiating crosslinking reaction. The first relaxation zone may comprise a conduit means (35) for the admission of the crosslinkable material thereto from said high pressure means, said conduit means having a constriction within a passage to cause or allow working of the material as it passes therethrough and heating means for heating the contents of said passage towards the threshold temperature at which crosslinking takes place.

The die means (51) comprises a longitudinal passage defining the shape to be imparted to the material and heating means to heat said passage.

Means for maintaining back pressure within the die passage may be a constrictor member (39) arranged at the outlet end of said die passage to restrict the exit therefrom of the substantially crosslinked material.

The breaker plate assembly (28) may define a plurality of feed orifices (35) upstream of the first relaxation zone and communicating with the high pressure means.

The breaker plate assembly (28) preferably comprises a plate having a plurality of circumferentially spaced orifices (35) through which the material passes from the high pressure means to the first relaxation zone.

The high pressure means may comprise a zone in which instantaneous compressions are applied to a mixture of material for generating pressure within the material thereby producing a substantially uniform temperature rise. The pressure generated in said zone is preferably at least $10^8$ N/m² (1000 atmospheres).

The material to be supplied to the pressure zone is usually in the form a particulate material together with, for example, residual catalyst and solvents. The material as supplied may contain a high level of oxygen and moisture. By applying the high pressures in accordance with the present application the substances such, for example, as residual solvent, oxygen and moisture are generally removed or expressed from the composition. The continued application of pressure and the further supply of material results in movement of the material within the pressure zone towards the breaker plate assembly whereby the material is worked as it passes the breaker plate which further increases the internal temperature by the internal working and at the same time serves to improve the uniformity of the material and permits residual pockets or pores containing vaporised solvent and the like to be compressed to provide a substantially pore free and bubble free homogeneous mixture. By passing the material into the expansion zone, immediately behind the high pressure zone, the internal working renders the material substantially plastic and susceptible to being extruded or moulded provided that the temperature of the material is retained below that at which commencement of the crosslinking reaction takes place. The compression and subsequent relaxation permits sufficient working of the materials to ensure that the amorphous and crystalline particles in the material form part of a homogeneous mixture and that as the material enters the die, the mixture is substantially uniform in both temperature and composition to provide for substantially uniform crosslinking.

The coefficient of friction within the die means may be substantially reduced by friction reducing agents such as lubricants, stabilisers or by the provision of PTFE or plasma coating on the internal surface of the die passages.

Furthermore, it has been found that by adjusting the back pressure to an appropriate level the formation of bubbles and vacuities within the tube so produced is substantially reduced.

Following is a description by way of example only and with reference to the accompanying informal drawings of methods of carrying the invention into effect.

Figure 1 is a view partly in section of a die barrel for producing tube in accordance with the present invention.

Figure 2 is a section through a mandrel and breaker plate assembly for use in combination with the die assembly of Figure 1.

Figure 3 illustrates the mounting assembly for the die assembly of Figure 1.

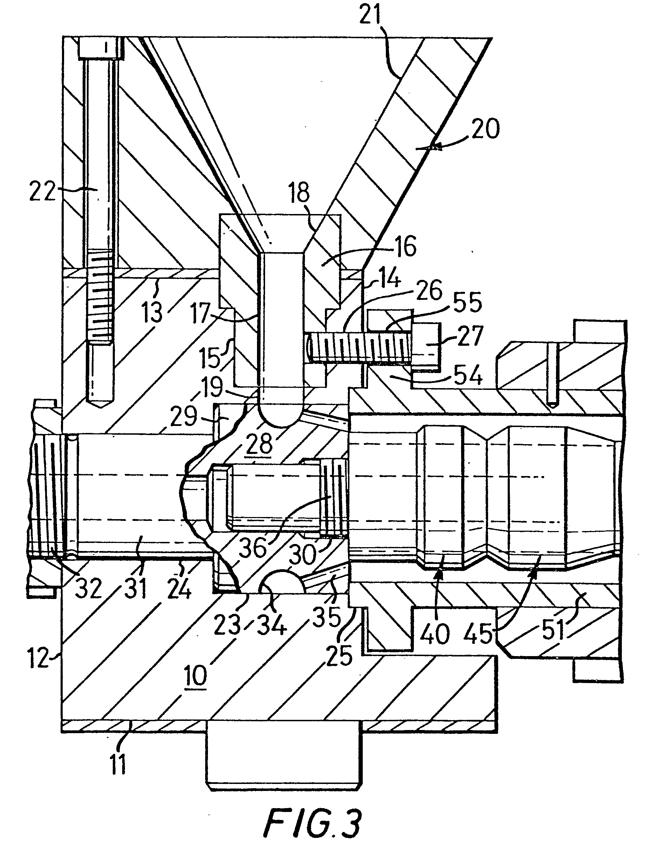

Referring to Figure 3, a support block 10 has a base 11 and a forward face 12, an upper face 13 and a rear face 14. The upper face 13 is bored at 15 to receive a cylinder piece 16 having a substantially vertically disposed through bore 17 constituting the cylinder which is provided with a frustoconical portion 18 at its upper end, the arrangement being such that through bore 17 communicates with a reduced portion of bore 15. Upper face 13 carries hopper 20, the inner frustoconical surface 21 of which is continuous with frustoconical portion 18 of cylinder piece 16. The hopper 20 is secured to upper face 13 of support block 10 by means of bolts 22 and serves to retain cylinder piece 16 in its operative location. The rear face 14 of support block 10 is provided with a substantially central cylindrical bore 23 which is reduced at 24 towards the forward end of block 10. The rearward extremity of bore 23 is expanded at 25. A plurality of circumferentially spaced bolt holes 26 are provided in rearward face 14 each being tapped to receive a securing bolt 27.

The central bore 23 and associated reduced bore portion 24 is adapted to receive a breaker plate assembly 28 which comprises a substantially cylindrical breaker plate 29 having a central bore 30 in the rearward face thereof and having a forward extension 31 reduced in diameter to fit within reduced cylindrical bore portion 24. The forward extremity of forward extension 31 is threaded at 32 for securing breaker plate assembly 28 within the bore 23 of support block 10. Breaker plate 29 is provided in the cylindrical surface thereof with an annular recess 34 having a substantially semi-circular cross section adapted to communicate with the lower extremity of the reduced portion 19 of bore 17 extending from the upper surface 13 of block 10. The recess is provided with a plurality of circumferentially spaced passages 35 extending from annular recess 34 to the rearward face of breaker plate assembly 28 each passage 35 being substantially cylindrical in cross section and being convergently inclined from annular recess 34 towards the axis of breaker plate assembly 28 in a direction towards the rearward face thereof.

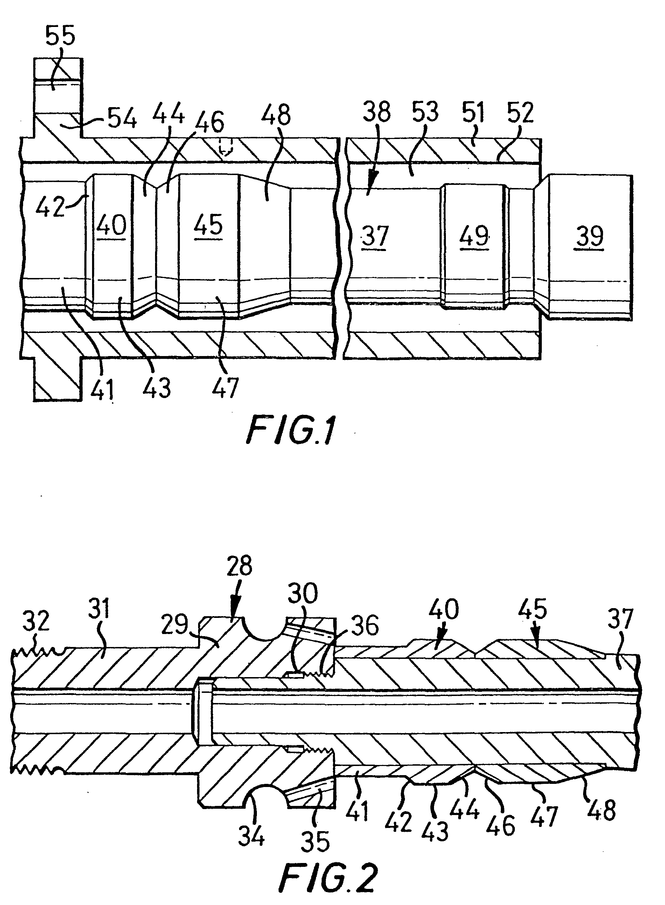

The central concentric bore 30 of breaker plate assembly 28 is adapted to receive a threaded spigot 36 which engages with threads on the internal surface of concentric bore 30, said spigot extending forwardly from a mandrel 37, see Figure 1, of die assembly 38. The mandrel 37 of die assembly 38 is substantially cylindrical and extends the longitudinal length of the die assembly per se. The mandrel is provided with a threaded counter bore at its rearward end and is adapted to receive a constrictor member 39 having a threaded spigot engaging with counter bore in the rearward end of mandrel 37. The mandrel carries towards its forward end a first constriction element 40 juxtaposed the breaker plate assembly 28. The first constriction element 40 comprises a substantially cylindrical sleeve 41 disposed about mandrel 37 having at its rearward end a forward frustoconical surface 42 and intermediate cylindrical portion 43 and a rearward frustoconical portion 44 which together define an expansion on the overall radial extent of mandrel 37. Mandrel 37 also carries second constriction element 45 contiguous element 40, element 45 comprising a forward frustoconical surface 46, intermediate cylindrical surface 47 and a rearward frustoconical surface 48 to define a second expanded portion on mandrel 37, the longitudinal extent of the second constriction element being greater than the longitudinal extent of the forward constriction element.

The mandrel 37 carries towards its rearward end a further small constriction 49 spaced from constrictor 39.

The die assembly 38 is completed by the provision of an external longitudinally extending sleeve or barrel 51 having a substantially cylindrical inner surface 52 the inner surface 52 of barrel 51 and the external surface of mandrel 37 serving to define die passage 53 for the passage of material therepass during processing.

A die barrel 51 is provided with a plurality of heating elements thereabout (not shown) and mandrel 37 may also be provided with heating means if this is considered to be desirable. The die barrel 51 is provided at its forward end with a radial flange 54 which is provided with a plurality of circumferentially spaced holes 55 adapted to cooperate with bolt holes 26 to receive bolts 27 to secure the die barrel to support block 10.

A plunger having a piston portion is adapted to enter a piston block 16 as a sliding fit within through bore 17, said plunger being propelled by an eccentric press or the like for the purpose of applying a plurality of instantaneous compressions within the bore itself. In operation a cross-linkable material typically polyethylene together with a cross linking agent such as dicumyl peroxide in a proportion of 1.5 to 3% by weight of dicumyl peroxide based on the weight of polyethylene is placed as a finely divided mixture in the hopper 20 and the reciprocation of the plunger forces material into the through bore 17 of cylinder piece 16, the action of the plunger serving to increase the temperature of the material until the material flows into the annular recess 34 and via breaker plate assembly passages 35 into the die passage 53.

As the material leaves the circumferentially spaced passages 35 in the breaker plate assembly 28, the temperature of the material is at a temperature below the threshold temperature at which crosslinking commences. The passage of the material into the annular space defined by the cylindrical portion 41 of the first constriction 40 serves to impart momentum to the material leaving the breaker plate assembly 28. As the material passes the first constriction defined by a cylindrical surface 43 the reduction in cross section area in the die passage in this area results in the further working of the material, and a further increase in the temperature towards the threshold temperature followed by a relaxation of the material into the area of increased cross section defined by the rearward frustoconical portion 44 of the first constriction 40 and a forward frustoconical portion 46 of the second constriction element 45.

Further movement of the material along the die results in the material passing a second constriction with further working of the material and additional heat being imparted from the mandrel and from the die barrel 51 which together with the working of the material serves to raise the material to the threshold temperature at which crosslinking of the material is initiated. Relaxation of the material from the second constriction 45 occurs so that the material is passing along the cylindrical portion of mandrel 37 away from the second constriction element 45 before substantial cross-linking of the material takes place.

The material is maintained within the die assembly in a portion of substantially constant cross section area while the cross-linking action proceeds substantially to completion. As the material approaches the rearward end of the die assembly it passes over rearward constriction 49 and is thus squeezed on exit by means of constrictor 39 in order to provide a back pressure within the die passage 53. The back pressure generated by constrictor 39 serves to ensure intimate contact between the material within the die passage and the walls thereof in order to obtain improved heat transfer from the mandrel and the die barrel during the period in which crosslinking takes place.

It has been found that by using the apparatus and method of invention as described above the material within the die is maintained in intimate contact with the surfaces of the die assembly and substantially uniform crosslinking takes place while the back pressure ensures a substantial reduction in the formation in bubbles and vacuities in the tube produced.

**Claims**

1. A process for forming shaped crosslinked polyolefinic materials by extrusion, which process comprises subjecting a crosslinkable polyolefinic material to high pressure in a high pressure treatment zone (17, 19, 34) and passing said material through a first relaxation and expansion zone (41) wherein the temperature is below the threshold temperature and through a constriction into an annular passage (53) of a die barrel assembly (51), whereby the material is shaped to assume the final shape and whereby the material is heated due to the action of pressure and constricted flow to temperatures above said threshold temperature, characterised in that the material leaving the constriction (40) is passed through a second relaxation and expansion zone (44, 46) series connected to said constriction (40) at a temperature still below the threshold temperature and through a second constriction (45) delimiting said second relaxation and expansion zone (44, 46) to enter the annular passage at a temperature in excess of said threshold temperature.

2. A process as claimed in claim 1 wherein the high pressure is in excess of $10^8$ N/m$^2$ (1000 atmospheres).

3. A process as claimed in either of the preceding claims wherein the high pressure is generated by means of an excentre press.

4. A process as claimed in any preceding claim wherein the material is passed from the high pressure treatment zone (17, 19, 34) to the first relaxation and expansion zone (41) through a breaker plate assembly (28) which provides a back pressure for maintaining high pressure within said high pressure zone and at the same time causes or allows working of the material to further increase the temperature of the material passing into said first relaxation and expansion zone.

5. A process as claimed in any preceding claim wherein the material passing through the relaxation and expansion zones (41; 44, 46) is thereby preformed to approximate the final shape of the die formed product.

6. An extruder for forming shaped crosslinked polyolefinic materials, said extruder comprising a high pressure treatment zone (17, 19, 34) for subjecting a crosslinkable polyolefinic material to high pressure, a breaker plate assembly (28) contiguous with said high pressure treatment zone (17, 19, 34) and debouching into an annular passage (53) formed in a die barrel assembly (51), said annular passage (53) including a relaxation and expansion zone (41) series connected to said breaker plate assembly (28), a constriction (40, 45) forming the outlet of said relaxation and expansion zone (41) and a die passage (53) to define the tube shape said constriction being formed on a mandrel (37) disposed coaxially within said die barrel assembly (51) characterised in that a second relaxation and expansion zone (44, 46) is series connected to first constriction (40) and defined by a second constriction (45), and in that the mandrel is releasably connected to the breaker assembly (28).

7. An extruder as claimed in claim 6 wherein the relaxation zones are defined at one end by a breaker plate assembly (28) debouching into a feed end of the die passage constituting the first relaxation zone (41).

8. An extruder as claimed in either of claims 6 and 7 wherein the heating in the die means (51.37) is effected by the application of external heat and by the working of the material passing the constrictions (40.45) to provide substantially uniform heating of the material to a temperature greater than that at which crosslinking occurs thereby initiating the crosslinking reaction.

9. An extruder as claimed in claim 8 wherein means for maintaining back pressure within the die passage are provided by a constrictor member (39) arranged at the outlet end of said die passage to restrict the exit therefrom of the substantially crosslinked material.

10. An extruder as claimed in claim 7 wherein the breaker plate assembly (28) defines a plurality of feed orifices (35) upstream of the first relaxation zone (41) and communicating with the high pressure means (17, 19, 34).

11. An extruder as claimed in claim 10 wherein the breaker plate assembly (28) comprises a plate having a plurality of circumferentially spaced orifices (35) through which the material passes from the high pressure means (17, 19, 34) to the first relaxation zone (41).

12. An extruder as claimed in any one of claims 6 to 11 wherein the high pressure means (17, 19, 34) comprises a zone in which instantaneous compressions are applied to a mixture of material for generating pressure within the material thereby producing a substantially uniform temperature rise therewithin.

13. An extruder as claimed in claim 12 wherein the pressure generated is at least $10^8$ N/m² (1000 atmospheres).

**Revendications**

1. Procédé de préparation de matières polyoléfiniques réticulées façonnées, par extrusion, ce procédé consistant à soumettre une matière polyoléfinique réticulable à une pression élevée dans une zone de traitement à haute pression (17, 19, 34) et à faire passer cette matière à travers une première zone de relaxation et d'expansion (41), dans laquelle la température est inférieure à la température de seuil, et à travers une zone d'étranglement vers un passage annulaire (53) d'un assemblage à corps cylindrique de filière (51), de sorte que la matière est conformée pour prendre sa forme finale et qu'elle est chauffée, du fait de l'action de la pression et de l'écoulement restreint, jusqu'à des températures supérieures à la température de seuil susdite, ce procédé étant caractérisé en ce que la matière quittant la zone d'étranglement (40) passe par une seconde zone de relaxation et d'expansion (44, 46) qui est reliée en série avec la zone d'étranglement (40), à une température encore inférieure à la température de seuil, et à travers une seconde zone d'étranglement (45), constituant l'une des limites de cette seconde zone de relaxation et d'expansion (44, 46), pour pénétrer ensuite dans le passage annulaire à une température supérieure à la température de seuil susdite.

2. Procédé suivant la revendication 1, caractérisé en ce que la pression élevée est supérieure à $10^8$ N/m² (1000 atmosphères).

3. Procédé suivant l'une ou l'autre des revendications précédentes, caractérisé en ce que la pression élevée est obtenue grâce à une presse excentrique.

4. Procédé suivant l'une quelconque des revendications précédentes, caractérisé en ce que la matière passe de la zone de traitement à haute pression (17, 19, 34) vers la première zone de relaxation et d'expansion (41) via un assemblage à croisillon ou étoile (28) qui crée une contre-pression pour entretenir une pression élevée à l'intérieur de la zone à haute pression susdite et, en même temps, provoque ou permet un traitement de la matière pour augmenter encore la température de celle-ci passant vers la première zone susdite de relaxation et d'expansion.

5. Procédé suivant l'une quelconque des revendications précédentes, caractérisé en ce que la matière traversant les zones de relaxation et d'expansion (41, 44, 46) est ainsi préformée jusqu'à présenter approximativement la forme finale du produit créé par la filière ou matrice.

6. Extrudeuse pour produire des matières polyoléfiniques réticulées formées, comprenant une zone de traitement à haute pression (17, 19, 34) permettant de soumettre une matière polyoléfinique réticulable à une haute pression, un assemblage à croisillon ou étoile (28) voisin de la zone de traitement à haute pression (17, 19, 34) et débouchant dans un passage annulaire (53) formé dans un assemblage à corps cylindrique de filière ou matrice (51), ce passage annulaire (53) comprenant une zone de relaxation et d'expansion (41) reliée à la suite de l'assemblage à croisillon ou étoile (28), un ensemble à étranglement (40, 45) formant la sortie de la zone susdite de relaxation et d'expansion (41), et un passage annulaire de filière (53) destiné à créer la forme du tube, cet ensemble à étranglement étant formé sur un mandrin (37) disposé coaxialement à l'intérieur de l'ensemble à corps cylindrique d'extrudeuse (51), cette extrudeuse étant caractérisée en ce qu'une seconde zone de relaxation et d'expansion (44, 46) est prévue à la suite du premier ensemble à étranglement (40) et est délimitée par un second élément d'étranglement (45), et en ce que le mandrin est relié de façon amovible à l'ensemble à croisillon ou étoile (28).

7. Extrudeuse suivant la revendication 6, caractérisée en ce que les zones de relaxation sont délimitées à une extrémité par un assemblage à croisillon ou étoile (28) débouchant dans une extrémité d'alimentation du passage annulaire de filière, formant la première zone de relaxation (41).

8. Extrudeuse suivant l'une ou l'autre des revendications 6 et 7, caractérisée en ce que le chauffage dans les éléments de filière ou matrice (51, 37) est réalisé par l'application d'une chaleur externe et par le travail de la matière passant par les zones d'étranglement (40, 45) pour produire un chauffage pratiquement uniforme de cette matière jusqu'à une température supérieure à celle à laquelle une réticulation se développe, ce qui amorce ainsi la réaction de réticulation.

9. Extrudeuse suivant la revendication 8, caractérisée en ce qu'on prévoit des moyens pour maintenir une contre-pression à l'intérieur du passage annulaire de filière, grâce à un élément d'étranglement (39) agencé à l'extrémité de sortie de ce passage annulaire de filière, pour limiter la sortie, hors de celui-ci, de la matière pratiquement réticulée.

10. Extrudeuse suivant la revendication 7, caractérisée en ce que l'assemblage à croisillon ou étoile (28) présente une série d'orifices d'alimentation (35) en amont de la première zone de relaxation (41) et communiquant avec les moyens à haute pression (17, 19, 34).

11. Extrudeuse suivant la revendication 10, caractérisée en ce que l'assemblage à croisillon ou étoile (28) comprend un croisillon ou étoile présentant une série d'orifices (35) espacés suivant la circonférence et à travers lesquels la matière passe depuis les moyens à haute pression (17, 19, 34) vers la première zone de relaxation (41).

12. Extrudeuse suivant l'une quelconque des revendications 6 à 11, caractérisée en ce que les moyens à haute pression (17, 19, 34) comprennent une zone dans laquelle des compressions instantanées sont appliquées à un mélange de matière pour créer une pression à l'intérieur de celle-ci, en produisant de la sortie une élévation pratiquement uniforme de température à l'intérieur de cette matière.

13. Extrudeuse suivant la revendication 12, caractérisée en ce que le pression créée est d'au moins $10^8$ N/m² (1000 atmosphères).

**Patentansprüche**

1. Verfahren zur Herstellung geformter vernetzter polyolefinischer Materialien durch Strangpressen, wobei ein vernetzbares polyolefinisches Material in einer Hochdruck-Behandlungszone (17, 19, 34) mit hohem Druck beaufschlagt und durch eine erste Entspannungs- und Expansionszone (41), in der die Temperatur unter der Grenztemperatur liegt, und durch eine Einschnürung in einen Ringkanal (53) einer Formwerkzeug-Hülse (51) geleitet wird, wodurch das Material aufgrund der Einwirkung von Druck und Strömungseinschnürung auf Temperaturen oberhalb der Grenztemperatur erwärmt wird, dadurch gekennzeichnet, daß das die Einschnürung (40) verlassende Material durch eine mit der Einschnürung (40) in Reihe liegende zweite Entspannungs- und Expansionszone (44, 46) bei einer immer noch unter der Grenztemperatur liegenden Temperatur und durch eine die zweite Entspannungs- und Expansionszone (44, 46) begrenzende zweite Einschnürung (45) geleitet wird und in den Ringkanal mit einer über der Grenztemperatur liegenden Temperatur eintritt.

2. Verfahren nach Anspruch 1, dadurch gekennzeichnet, daß der Hochdruck mehr als $10^8$ N/m² (1000 at) beträgt.

3. Verfahren nach einem der vorheregehenden Ansprüche, dadurch gekennzeichnet, daß der Hochdruck durch eine Exzenterpresse erzeugt wird.

4. Verfahren nach einem der vorhergehenden Ansprüche, dadurch gekennzeichnet, daß das Material aus der Hochdruck-Behandlungszone (17, 19, 34) in die erste Entspannungs- und Expansionszone (41) durch eine Lochplatteneinheit (28) geleitet wird, die einen Rückdruck zur Unterhaltung von Hochdruck innerhalb der Hochdruckzone erzeugt und gleichzeitig ein Bearbeiten des Materials bewirkt oder ermöglicht, wodurch die Temperatur des in die erste Entspannungs- und Expansionszone fließenden Materials weiter erhöht wird.

5. Verfahren nach einem der vorhergehenden Ansprüche, dadurch gekennzeichnet, daß das die Entspannungs- und Expansionszone (41; 44, 46) passierende Material dadurch zu etwa der Endform des Formwerkzeug-Erzeugnisses vorgeformt wird.

6. Kolbenstrangpresse zur Herstellung geformter vernetzter polyolefinischer Materialien, mit einer Hochdruck-Behandlungszone (17, 19, 34) zum Beaufschlagen eines vernetzbaren polyolefinischen Materials mit hohem Druck, mit einer Lochplatteneinheit (28), die an die Hochdruck-Behandlungszone (17, 19, 34) angrenzt und in einen Ringkanal (53), der in einer Formwerkzeug-Hülse (51) ausgebildet ist, übergeht, wobei der Ringkanal (53) eine mit der Lochplatteneinheit (28) in Reihe liegende Entspannungs- und Expansionszone (41), eine den Auslaß aus der Entspannungs- und Expansionszone (41) bildende Einschnürung (40, 45) und einen Formwerkzeug-Kanal (53) zur Begrenzung der Rohrform umfaßt und die Einschnürung an einem koaxial innerhalb der Formwerkzeug-Hülse (51) angeordneten Dorn (37) ausgebildet ist, dadurch gekennzeichnet, daß mit der ersten Einschnürung (40) eine zweite Entspannungs- und Expansionszone (44, 46) in Reihe liegt und durch eine zweite Einschnürung (45) begrenzt ist, und daß der Dorn mit der Lochplatteneinheit (28) lösbar verbunden ist.

7. Kolbenstrangpresse nach Anspruch 6, dadurch gekennzeichnet, die Entspannungszonen an einem Ende durch eine Lochplatteneinheit (28) begrenzt sind, die in ein Zuführende des Formwerkzeug-Kanals, das die erste Entspannungszone (41) bildet, übergeht.

8. Kolbenstrangpresse nach einem der Ansprüche 6 oder 7, dadurch gekennzeichnet, daß die Erwärmung in dem Formwerkzeug (51, 37) durch Einwirkung von äußerer Wärme und durch das Bearbeiten des die Einschnürungen (40, 45) passierenden Materials erfolgt unter im wesentlichen gleichmäßiger Erwärmung des Materials auf eine Temperatur, die höher als diejenige ist, bei der eine Vernetzung auftritt, wodurch die Vernetzungsreaktion initiiert wird.

9. Kolbenstrangpresse nach Anspruch 8, dadurch gekennzeichnet, daß Mittel zur Unterhaltung von Rückdruck innerhalb des Formwerkzeugs-Kanals durch einen Einschnürungsteil (39) gebildet sind, der am Austrittsende des Formwerkzeug-Kanals angeordnet ist und den Austritt des im wesentlichen vernetzten Materials aus diesem drosselt.

10. Kolbenstrangpresse nach Anspruch 7, dadurch gekennzeichnet, daß die Lochplatteneinheit (28) eine Mehrzahl Zuführöffnungen (35) stromauf von der ersten Entspannungszone (41) und in Verbindung mit den Hochdruck-Mitteln (17, 19, 34) begrenzt.

11. Kolbenstrangpresse nach Anspruch 10, dadurch gekennzeichnet, daß die Lochplatteneinheit (28) eine Platte mit einer Mehrzahl von umfangsmäßig beabstandeten Löchern (35) umfaßt, durch die das Material aus den Hochdruck-Mitteln (17, 19, 34) zu der ersten Entspannungszone (41) passiert.

12. Kohlenstrangpresse nach einem der Ansprüche 6—11, dadurch gekennzeichnet, daß die Hochdruckmittel (17, 19, 34) eine Zone aufweisen, in der ein Materialgemisch mit momentanen Kompressionskräften beaufschlagt wird unter Erzeugung von Druck innerhalb des Materials, so daß darin eine im wesentlichen gleichmäßige Temperatur erzeugt wird.

13. Kolbenstrangpresse nach Anspruch 12, dadurch gekennzeichnet, daß der erzeugte Druck wenigstens $10^8$ N/m² (1000 at) beträgt.

FIG.1

FIG.2

1

FIG.3